# EUROPEAN PATENT APPLICATION

(11) **EP 2 026 275 A1**
(43) Date of publication of application: **18.02.2009**
(21) Application number: 08161200.4
(22) Date of filing: 25.07.2008
(51) Int. Cl.: G06Q 30/00

(54) **A Method of responding to a media entity using a mobile device**

(30) Priority: 27.07.2007 GB 0714660
(71) Applicant: HEWLETT-PACKARD DEVELOPMENT COMPANY, L.P., Houston, TX 77070 (US)
(72) Inventor: Kindberg, Timothy, Bristol, BS34 8QZ (GB)
(74) Representative: Marsh, David John

(57) **Abstract**

A method responding to a media entity using a mobile device is described. The method comprises: capturing from the media entity, using a sensor of the mobile device, content encoded in machine-readable form, the content including a reply, a channel identification, and a communications address; configuring, within the mobile device, a communications message including the reply and channel identification; and transmitting, from the mobile device, the message to the communications address.

## Description

### Technical Field

The present invention relates to a method of responding to a media entity using a mobile device. The term 'media entity' as used herein is intended to have a broad meaning covering the physical medium by which different types of advertisement may be made. 'Advertisement' in this sense covers promotions including coupons, direct mail letters, SMS vouchers, etc. where a consumer response is sought.

### Background to the Invention

Advertising is commonly carried out via many different communications channels. Advertisers have long been devising ways of obtaining feedback which determines which channel was used for a positive response and using the collated results to target the most effective channels in different scenarios.

One of the most commonly implemented types of feedback is to ask the positive respondents to specify where they heard of the product or service being provided, whether it be by a billboard advertisement, a newspaper article, the television, a recommendation etc. However each of these solutions requires the respondent voluntarily to provide this information and of course not all users agree to provide such feedback. This in turn often leads to the results of such feedback being distorted by relating to only a subset of the overall respondents. Furthermore, the user experience in such prior art solutions is tainted by requiring the user to provide additional information.

Alternative attempts at obtaining feedback regarding advertising and marketing campaigns have been of limited success. One method which has been used when the feedback channel is via the Internet, is to provide a different URL (Universal Resource Locator) to each different channel of advertising. Therefore advertising via a billboard may specify contacting the advertiser at www.advertiser.com/product/billboard whereas advertising via the newspaper may specify contacting www.advertiser/product/ newspaper for example. The difficulty with this approach is that it relies on the communication channel always being via an Internet-connectable device. Also, this manner of feedback can result in a poor user experience as often lengthy unique addresses need to be keyed into the Internet-enabled device and this procedure can also suffer from rekeying errors.

Many SMS (Short Message Service)-based marketing and promotional campaigns exist for mobile telecommunications devices. Examples of such include campaigns to purchase goods, to request further information or to vote for contestants on a television programme. Such campaigns may be promoted in different media, such as newspapers, magazines, posters or television, and in different locations. The feedback channel for responding is via the SMS channel of the mobile telecommunications device.

In such campaigns, users are invited to text a specific message to a shortened telephone number, referred to below as a "short code". The use of a short code reduces the rekeying required by the user to respond to the advertisement and makes responding to some degree easier. However, the user experience is still not ideal. Furthermore determining the advertising/marketing channel from which the response originated is still problematic. Whilst a short code can in theory be assigned to each particular marketing channel, this is not implemented in practice as short codes, by their nature, are in short supply and so it is expensive for promoters to lease a plurality of them. The only alternative is to require the user to type in additional information identifying the advertising channel used within the text message, which would be inconvenient and would furthermore discourage users from responding to the promotion. As a result, it is not feasible with such a system for promoters to determine the respective level of consumer response to the different advertising media channels, since it is not practicable to determine whether an advertisement placed in a particular newspaper has generated a greater level of response from consumers than that from a corresponding advertisement which has been broadcast on television.

### Summary of the Invention

Thus, in accordance with one embodiment of the present invention, there is provided a method responding to a media entity using a mobile device, the method comprising: capturing from the media entity, using a sensor of the mobile device, content encoded in a machine-readable form, the content including a reply, a channel identification identifying a channel, and a communications address; configuring, within the mobile device, a communications message including the reply and channel identification; and transmitting, from the mobile device, the message to the communications address.

The term "media entity" is intended to cover any form of media through which advertising is effected. This includes, but is not restricted to: visual forms of media, for example, advertising boards, a direct mail letter, printed advertisements, including newspapers, magazines, or flyers, television screens and monitors, electronic displays, and audio broadcasts. The "media entity" is arranged to represent encoded content in a machine-readable form.

The concept of "channel identification" is intended to cover any information which enables one channel or context of the content, or even one type of channel or context, to be distinguished from another. The channel identity could be, for example, a specific edition of a newspaper, or more generally the identity of a publication in which the content appears on a weekly basis.

With such an arrangement, it is possible for a user simply to capture an image or an audio transmission, for example, using the mobile device and to cause the content to be transmitted automatically to the address defined within the content, e.g. by actuating a function on the mobile device. This advantageously prevents any rekeying problems from arising, and minimises the user's required actions to facilitate a response, thereby enhancing the user experience.

It will be appreciated that, with such an arrangement, promoters/advertisers are able to place channel identifiers within identifier elements and ensure this information is conveyed to their website for assessment. Promoters/advertisers can then assess the level of consumer response to advertisements placed in different media entities. For example, in a newspaper advertisement, the content could include the identifier "Sunday Times, 8^{th} July 2007", whereas in a broadcast media entity or advertisement the content could include the identifier "Channel 4 Television, 9^{th} July 2007".

The mobile device is advantageously a mobile telecommunications device, in which case the content can be transmitted using an SMS message.

The communications address (also known as a destination address) could be in the form of a telephone number, which is preferably a standard telephone number associated with the destination address. By "standard telephone number" it is meant a telephone number which is not a short code. The standard number could be in the form of a local, national or international telephone number.

Furthermore, the destination address may comprise an e-mail address.

The channel of the content may be an advertisement in the form of an advertisement board or electronic display in a public place, a television screen, a direct mail letter or a printed advertisement, for example in a newspaper or magazine, or a flyer.

The content may be presented optically, in which case the mobile device is arranged to capture the content using an optical sensor.

Such optical presentation of the content is advantageously in the form of a two-dimensional barcode, since such a representation enables a large amount of content to be presented in a relatively small area. Alternatively, the content may be presented in the form of a two-dimensional glyph.

As an alternative to the use of an optical representation, the identifier element could be in the form of a radio-frequency signal, such as an RFID (Radio Frequency Identifier) tag signal or a Near Field Communications signal. Such signals would be generated by an appropriate transmitter or transponder at the advertisement. Similarly, the mobile device could include a corresponding radio-frequency receiver, such as Bluetooth or WiFi receiver or a Near Field Communications receiver.

In accordance with a further embodiment of the present invention, there is provided a method of advertising comprising: publishing an advertisement in a plurality of different advertising channels, the advertisement including an information element, the information element encoding, in machine-readable form, a reply to the advertisement, an advertising channel identification, and a destination address; receiving from a plurality of different consumer mobile devices respective messages each including a reply to the advertisement, together with its associated channel identification; and processing the replies received from each of the different channels to determine the relative effectiveness of the advertising channels.

Optionally, the processing step may comprise calculating the number of responses from each different advertising channel and storing the same.

In one embodiment, the processing step may comprise calculating temporal data based on the time of receipt of the messages.

In accordance with a further embodiment of the present invention, there is provided a method of processing responses to advertisements published in a plurality of different advertising channels, the method comprising: receiving messages, constructed at consumer mobile devices from machine-readable information provided within the advertisements, each message including a reply to an advertisement, together with an associated advertisement channel identification; and processing the replies received from each of the different channels to determine the relative effectiveness of the different advertising channels.

The embodiments of the present invention extend to an advertisement presenting content in a machine-readable encoded form for capture by a mobile device, the content comprising a destination address and information, including an identity of the advertisement, to be transmitted to the destination address.

The content can be presented optically, such as in the form of a two-dimensional barcode, or two-dimensional glyph, and the advertisement may be in printed form. Alternatively, the content may be presented as a radio-frequency signal from a radio-frequency transmitter.

The content preferably includes a channel reference for the advertisement, such as its publication date, in the case of a published advertisement, or a broadcast date in the case of a televised advertisement, or a location in the case of a poster.

### Brief Description of the Drawings

Presently preferred embodiments of the present invention will now be described with reference to the accompanying drawings, in which:
Figure 1 is a schematic representation of an advertising channel and a combination of a mobile device for responding to the advertisement connectable to an Internet server for recording the response in accordance with an embodiment of the present invention;
Figure 2 is a schematic diagram illustrating three data components of an information element shown in Figure 1, namely a reply, a destination address and a channel ID, which are encoded in a barcode in accordance with an embodiment of the present invention;
Figure 3 is a flowchart illustrating a method of advertising and responding to the advertising using a mobile device, in accordance with an embodiment of the present invention;
Figure 4 is a flowchart showing, in detail, steps involved in creating and sending of the message within the method illustrated in Figure 3;
Figure 5 is a flowchart showing, in detail, steps involved in processing of the received message within the method illustrated in Figure 3;
Figure 6 is a schematic diagram illustrating an embodiment of the present invention, in which a voting option is encoded as a two-dimensional barcode which appears on a television screen as part of a broadcast television programme;
Figure 7 is a schematic diagram illustrating another embodiment of the present invention, in which a newspaper advertisement includes a two-dimensional barcode which encodes a reply message to the advertisement, together with the telephone number to which the reply is to be sent and information identifying the particular edition of the newspaper;
Figure 8 is a schematic diagram illustrating another embodiment of the present invention, in which an advertisement on a billboard includes in a two-dimensional barcode which encodes the same information as that of the barcode in the embodiment illustrated in Figure 7;
Figure 9 is a schematic diagram illustrating a further embodiment of the present invention, in which a radio-frequency transmitter is attached to an advertisement on a billboard, enabling information suitable for a reply, together with the telephone number to which the reply is to be sent and information identifying the particular billboard, to be communicated to a mobile device using an RF Communications system; and
Figure 10 is a schematic diagram illustrating a structure of a web server of Figure 1 which performs the processing of the replies received to the advertisements, in which information about the responses is determined, such as the number of replies from each advertisement channel.

### Detailed Description

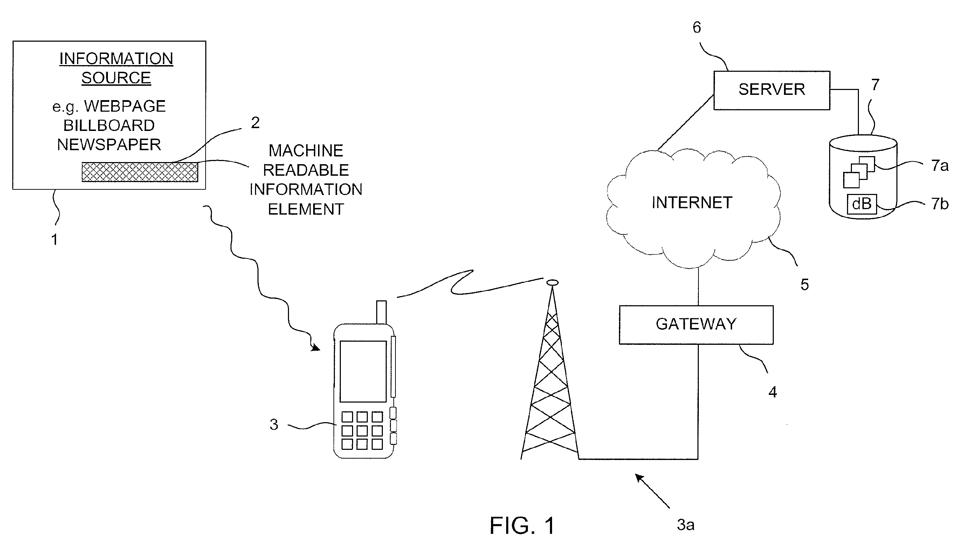

Referring to Figure 1, a data communications structure is shown which supports an embodiment of the present invention. The structure includes an advertising channel 1, such as a broadcast television programme, an advertisement in a newspaper or magazine, or a billboard advertisement, which includes an information element 2. The information element 2 may be represented as a two-dimensional barcode, but could alternatively be a glyph or even an information signal generated from radio-frequency transmitter or a radio-frequency transponder. A mobile device 3 senses the information element 2 and constructs and sends a data message (such as an SMS message or an e-mail message) via a mobile communications network 3a to a messaging gateway 4. The gateway allows the message to be sent over the Internet 5 to a web server 6 having a data store 7 for hosting a website 7a to which the message is addressed. The sensing of the information element advantageously improves the user experience because no rekeying is required. Also once the information element has been sensed, the construction and sending of the message containing all of the required content can be carried out without any required user participation.

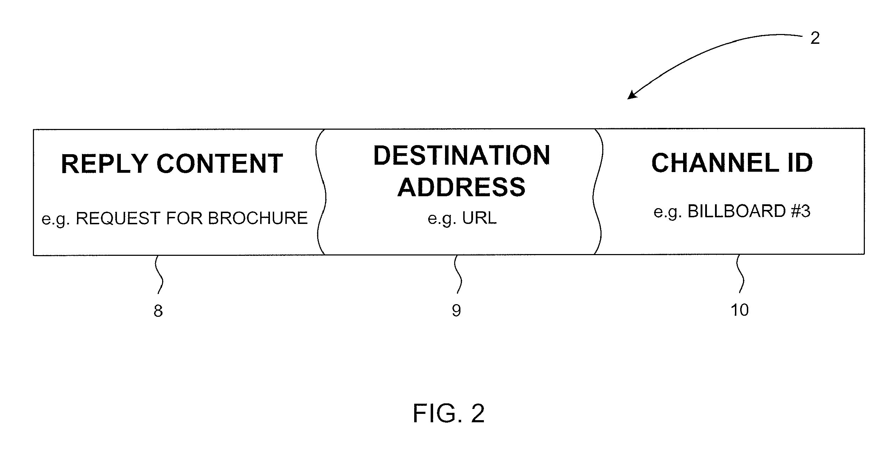

As shown in Figure 2, the information element 2 comprises content, encoded in machine-readable form, which includes at least three information components: a reply message 8 to the advertisement (reply); a communications address 9 to which the reply should be sent (destination address); and a channel identifier 10 (channel ID) uniquely identifying the channel for the advertisement.

The reply 8 may be in the form of a vote for a contestant, e.g. in a talent competition broadcast on a television programme. Alternatively, the reply 8 may be in the form of a request to purchase an item or service, or merely to request that further information concerning a product or service be sent to the consumer. It will be appreciated that, where the mobile device 3 is a mobile telephone, a network identity of the mobile phone 3 will normally be included within any SMS message transmitted by the mobile telephone. Equally, if the mobile device 3 is one capable of sending the response as an e-mail, the e-mail network address of the mobile device 3 will also normally be specified within any e-mail message sent by the mobile device 3.

The destination address 9 determines where the reply 8 and the channel ID 10 are to be sent, and this can take the form of a standard telephone number, of the type described above, or alternatively an e-mail address.

The function of the channel ID 10 is to enable identification at the destination (website 7a) of the advertising channel 1 which gave rise to the reply 8 from the consumer. So, in the case of a newspaper advertisement, the channel ID 10 could include the title of the newspaper, the date of its publication, and, where several editions of a newspaper are published on the same day, also the edition number. In the case of an advertisement on a billboard, the channel ID 10 could include the geographical location (e.g. latitude/longitude co-ordinates, or road and zip code, or some other code, which matches via a concordance at the website, with a location) of the billboard. With broadcast television programmes, the channel ID 10 could include the title of the television programme, the television channel on which the programme was broadcast, and the time and date of the broadcast.

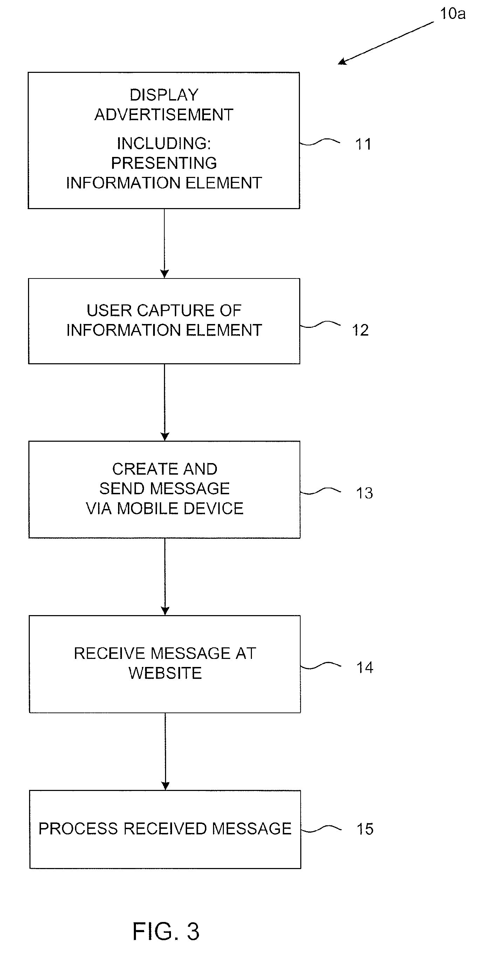

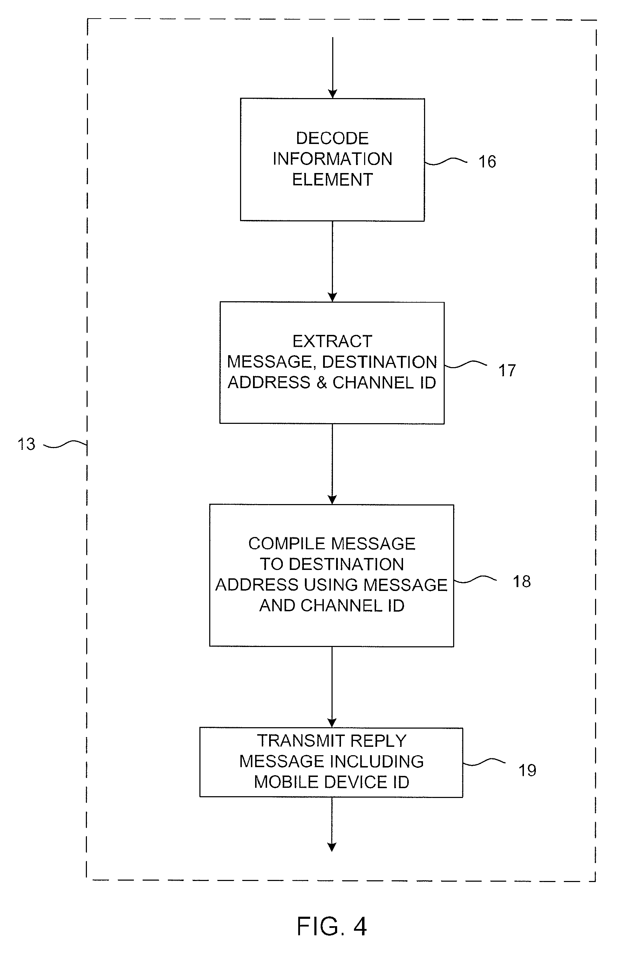

A method 10a of implementing an embodiment of the present invention will now be described with reference to Figure 3. As described above, the method 10a commences with the display, at Step 11, of the advertisement in an advertising channel 1. The displaying step includes presenting the information element 2 simultaneously with the advertisement, whether on a television screen or in printed form in a magazine, newspaper or billboard. The information element 2 may be in the form of a two-dimensional barcode or a glyph for example. A consumer then captures, at Step 12, the information element 2 using their mobile device 3, e.g. by actuating a capture function of the mobile device 3 to scan the barcode or record the glyph for example. The encoded content is captured by a sensor (such as a camera, a Blutooth or WiFi sensor, or a Near Field Communication sensor) on a mobile device 3. The mobile device 3, which can be a mobile telecommunications device, such as a mobile telephone, a Personal Digital Assistant (PDA) or a palm-top computer, is configured by an application running on the device, to create and send, at Step 13, a message from the content contained in the captured information element 2. This creating and sending step is described in greater detail below with reference to Figure 4. The message is ultimately received, at Step 14, at the website 7a which is operated on behalf of, controlled or owned by an advertising campaign promoter, as determined by the destination address.

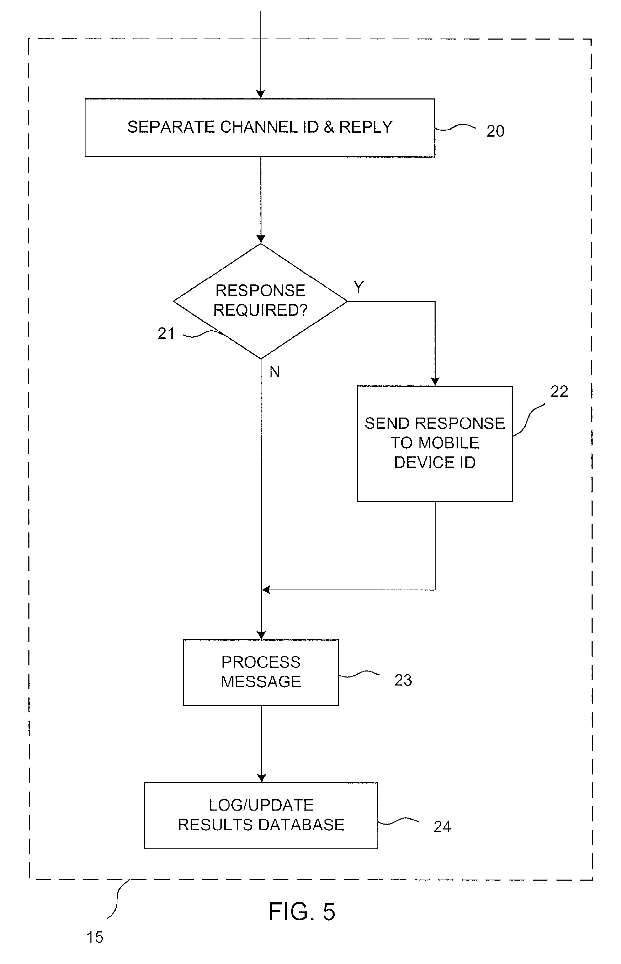

At the website 7a, the received message is processed, at Step 15, in order to determine the identity of the advertising channel 1 of each message. This processing step 15 is described in greater detail below with reference to Figure 5.

Figure 4 illustrates more specifically the steps involved in the above creating and sending step 13 of the method 10a. After capturing, at Step 12, the content contained in encoded form in the information element 2, an application running on the mobile device 3, decodes, at Step 16, the content so as to enable extraction of the three components of the content. The reply 8, the destination address 9 and the channel ID 10, are then extracted, at Step 17, by the application from the decoded content, a process which involves, for example, separating out the data into its respective information components using known identifiers which delineate the different data. The following example illustrates this:

Decoding of the two-dimensional bar code leads to the following data being generated: sms:+44555666666?body=c:187436;I:871263474821734

The first component is the destination address which is separable from the rest of the information by the characters '?body='. The second information component is the campaign identifier (#187436) which is identified by the characters 'c:'. The third information component is the location identifier (#871263474821734) which is identified by the characters 'I:'. Knowledge of these separator characters by the application running on the mobile device enables the information components to be separated.

The application then compiles at, Step 18, an SMS message using the reply 8 and the channel ID 10, and sends, at Step 19, the SMS message to the decoded communications address 9 via an SMS gateway 4 and the Internet 5 to the website 7a identified by the communications address 9. The communications address 9 is typically in the form of a full telephone number, namely not a short code, in order to minimise messaging costs for the advertiser and the user alike. The SMS gateway 4 typically converts this telephone number into a related Internet address. Alternatively, if the communications address 9 is in the form of an e-mail address and the mobile device 3 has an e-mail capability, an e-mail message is created and sent to another gateway (such as a WAP (Wireless Application Protocol) Gateway - not shown) which acts as a conduit enabling the e-mail to be transmitted via the Internet 5 to the website 7a. In a further alternative embodiment the communications address can be a short code. Whilst this is disadvantageous in terms of cost, there may be situations where multiple different ways of responding to an advertisement may be required. In these cases, by having a single short code as the common destination address 9, both the results of responding using the above-described embodiments and responding in a conventional manner by consumers who do not have the appropriate mobile device application running on their mobile device for example, can be collated together.

In a further embodiment of the present invention, the destination address 9 can be of another mobile telecommunications device, which is able to receive SMS messages. The message generated by the mobile device 3 is then routed to a communications device (such as a laptop computer with mobile telecommunications card) without having to pass through the internet. The communications device would have an appropriate application running on it for reading and processing the SMS message in a similar manner to that of the web server 6.

Steps 16 to 19 of the above described method 10a are carried out automatically as a consequence of the capturing step, without requiring any further human intervention which improves the user experience.

Figure 5 illustrates more specifically the steps involved in the above processing step 15 of the method 10a. After receiving the message, at Step 14, the reply, the channel ID and the mobile device ID are obtained, at Step 20, from the message. In some embodiments, the advertiser or his agent or the person commissioning the advertisement may wish to send a response to the consumer. This could be, for example, simply an acknowledgement that the reply has been received. Alternatively, this could take the form of further information concerning a product or service, or an invitation to apply for further products or services. Thus, a decision is taken, at Step 21, as to whether a response needs to be sent back to the mobile device 3. If a response is required, a suitable response is created and sent at Step 22, and the method 10a proceeds to the process message stage, at Step 23. If a response is not required as determined at Step 21, the method 10a proceeds directly to process message stage, at Step 23.

A further embodiment of the present invention involves processing which is performed at the advertiser/promoter's side of the feedback process, to render utility from the information which has been transmitted to the website 7a. This is manifested in the process message stage, at Step 23 of the above described embodiment. Here each reply is analysed with respect to the identity of the channel and optionally also the time at which the reply is received, so as to compile at Step 24 the results database 7b which indicates the number of replies received from each advertisement within a campaign. Processed information regarding the replies 8 is then stored in the database 7b associated with the web server 6 hosting the website 7a. Processing can be achieved, for example, by assigning respective counters to every possible channel ID 10 and incrementing the counter for a given channel ID each time a reply is received within the same message as that channel ID 10. By logging also the time of receipt of each reply 8, further valuable information can be obtained for determining the temporal effects of a distributed marketing campaign for example.

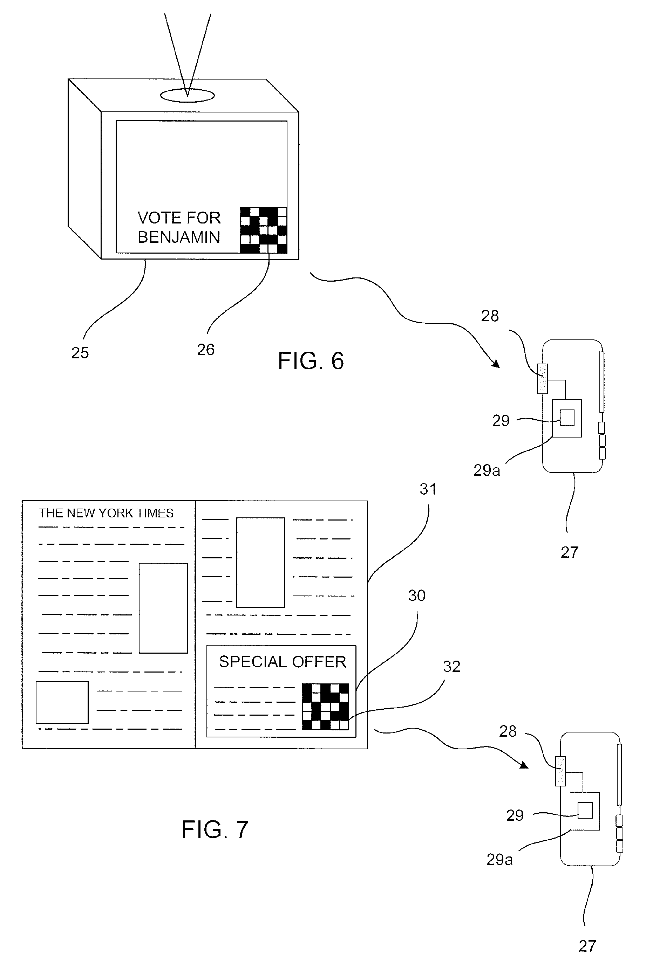

Figures 6 to 9 illustrate different embodiments of the present invention which use different advertising channels 1 or different information elements 2. These embodiments are only a sample of the numerous different channels which could be used in embodiments of the present invention and are not intended to be limiting to the scope of the present invention.

Figure 6 illustrates an embodiment of the present invention in which a competition is broadcast in a television programme, in which members of the public are requested to vote for their preferred contestant. As the name or photograph of each contestant appears on the television screen 25, an information element 2 in the form of a two-dimensional barcode 26 also appears on the screen 25. In the illustrated example, viewers are invited to register a vote for a contestant by the name of Benjamin. The barcode 26 has encoded therein three different data components of content: (a) a reply 8 identifying the preferred contestant; (b) content (channel ID 10) identifying the particular television programme within a series of such programmes presenting the same competition; and (c) the standard telephone number (destination address 9) to which the content of the information element 2 needs to be communicated for the viewer to register their vote. A viewer provided with a mobile telephone 27 with optical receiving capability (typically a camera) captures an image of the two-dimensional barcode 26 by pointing the optical sensor 28 of the mobile telephone 27 at the barcode 26 and actuating an image capture function of the mobile telephone 27. An application 29, provided within a processing module 29a in the mobile telephone 27, causes the mobile telephone 27 to decode the content in the barcode 26 and, either on the user's prompt or automatically, causes an SMS message incorporating both the above items (a) and (b) to be created and then sent to the telephone number of item (c). The application is typically downloaded to the mobile telephone 27 to provide the desired advertisement response function described previously. As is customary with any communication sent by mobile telephone, a sender network address ID is also sent with the message. Upon receipt of the SMS message at the destination, content identifying not only the preferred contestant but also the particular television programme is logged. The identity of the television programme is useful to the advertiser/promoter, for example, when a competition has been broadcast in different regions of a country and at different times, since this enables the promoter to ascertain the value of advertising the competition in the different regions and at the various times.

Figure 7 illustrates another embodiment of the present invention, in which an advertisement 30 for a product or service is printed in a newspaper 31, such as The New York Times in the illustrated example. As with the embodiment described above with reference to Figure 6, an information element 2 in the form of a two-dimensional barcode 32 is included within the advertisement 30. The barcode 32 has encoded therein (a) content indicating a reply 8 to the advertisement, which may be in the form of an acceptance of an offer by the reader, or a request for further information, depending on the nature of the advertisement; (b) content (channel ID 10) identifying the title and edition of the newspaper; and (c) the telephone number (destination address 9) to which the content is to be sent. To order the item being advertised (or to obtain further information), a reader captures an image of the barcode on their mobile telephone 27 which then creates and sends an SMS message in the same manner as described above with reference to the embodiment of Figure 6.

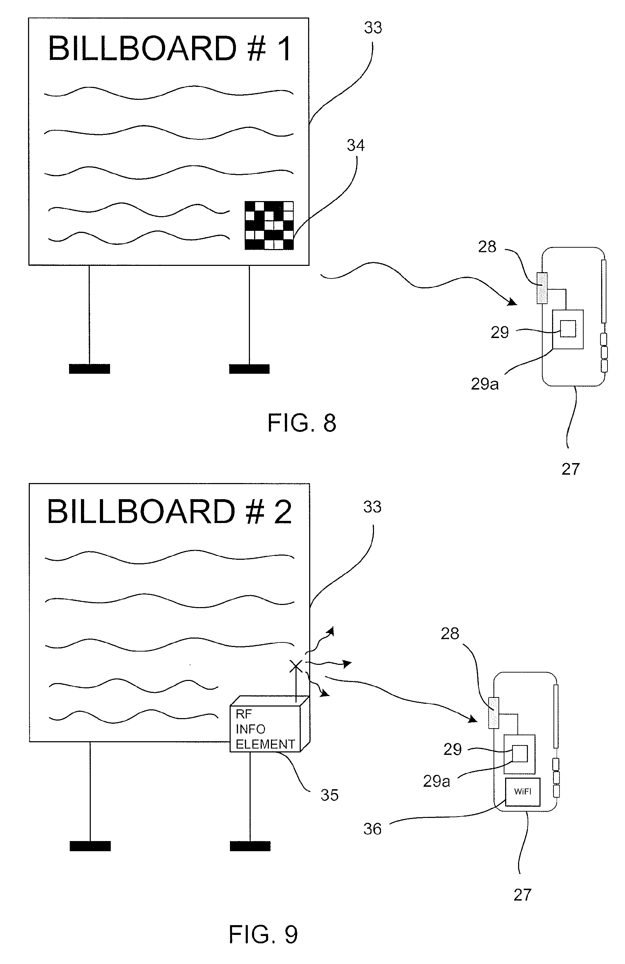

In another embodiment of the present invention, illustrated in Figure 8, a public advertisement is attached to a billboard 33, and, as with the embodiment of Figure 7 described above, a two-dimensional barcode 34 has encoded therein (a) content (reply 8) indicating acceptance of an offer by the reader, or a request for further information; (b) content (channel ID 10) identifying the geographical location of the billboard 33; and (c) the telephone number (destination address 9) to which the information is to be sent. Again, as with the embodiment of Figure 7, a potential customer captures an image of the two-dimensional barcode 34 by pointing the optical sensor 28 of the mobile telephone 27 at the barcode 34 and actuating an image capture function of the mobile telephone 27. As with the above-described embodiments, a message, including a reply 8 to the advertisement and an identifier (Channel ID 10) of the advertisement, is created and sent by the mobile telephone to the address encoded in the barcode 34. The information concerning the geographical location of the billboard 33 is useful to the promoter, since, by logging information regarding all of the SMS messages received, the promoter is then able to determine which locations generate the greatest response.

In a further embodiment, illustrated in Figure 9, a public advertisement is attached to a billboard 33, as with the embodiment described above with reference to Figure 8, but, instead of the information element 2 being a two-dimensional barcode, a radio-frequency (RF) transponder 35 is used to generate an RF signal as the information element 2. Upon reception of a radio-frequency trigger from an RF Communication module 36, such as a WiFi communication module 36, on a consumer's mobile telephone 27, the radio-frequency transponder 35 transmits, in encoded form, content including the same three information components of content as in the embodiments described above, namely a reply 8 to the advertisement, a channel ID 10 and a destination address 9 to which the reply 8 is to be sent, which, in the present embodiment, is a standard telephone number, as defined above. As mentioned above, the mobile telephone 27 of this embodiment is provided with an RF Communication (WiFi) module 36 which performs essentially the same function as the optical receiver 28 associated with the embodiments described above. Again, an application 29, provided within a processing module 29a in the mobile telephone 27, causes a message, which includes the reply 8 to the advertisement and an identifier of the advertisement (Channel ID 10), to be sent to the telephone number 9 encoded in the content transmitted by the radio-frequency transponder 35.

In an alternative embodiment, the RF transponder 35 could be a Near Field Communications (NFC) transponder and the mobile device could be provided with a Near Field Communications (NFC) module as the RF Communication module 36. Such technology operates over very small distances up to approximately 4cm but would still operate requiring the mobile device to stimulate/trigger the transmission of the RF information element signal.

In a further embodiment, it is possible to replace the RF transponder of the passive pull technologies described above with a continuously transmitting RF transmitter. This embodiment would then be an active data push transmission which would not require any user activity to capture the information element. However, the higher power consumption and the user experience of such push technology may not be as advantageous as the above-described RF pull technology.

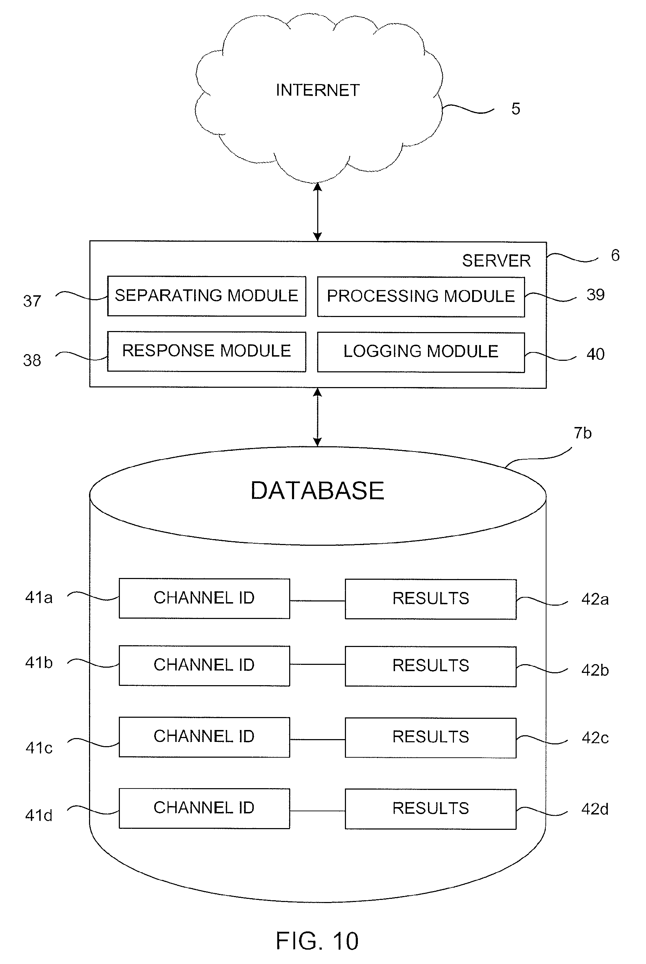

Components of the advertiser/promoter's web server 6 and its associated database 7b are illustrated in Figure 10. The server 6 includes four modules for effecting the processing operations, namely a separating module 37, a response module 38, a processing module 39 and a logging module 40. Whilst other functions are performed by the web server, these are conventional to any web server and are not described herein.

The separating module 37 is configured to separate out from each received message, the reply 8, the channel ID 10 and the mobile device ID (not shown). The channel IDs 10 can then be used for each marketing campaign as an index within the database 7b for collating the generated processing results. The response module 38 is arranged to create a response message (not shown) to be sent back to the mobile device 3, if required, either merely to confirm the receipt of the reply 8 or to supply further details of a product or service which have been requested in the reply 8, or even to supply further details of a product or service different from, but possibly related to, the product or service described in the advertisement. The processing module 39 processes the raw data to generate the marketing analysis results. This can take several forms but at its most basic level involves counting the replies received from each advertisement and the number of replies associated with each possible channel ID 10. By "associated" it is meant that the reply and the channel ID which are contained within the same message received by the server 6. The benefits of the processing are best realised when the number of replies is sufficiently high to enable statistically significant analysis of the results.

The logging module 40 stores all of the collated information received in the database 7b, in which each channel ID 41a, 41b, 41c, 41d, etc. has associated with it its processing results, for example the number of replies 42a, 42b, 42c, 42d. If desired, the time of receipt of each reply is also logged, and this can be compared with the publication date of the advertisement to create a "time response" parameter. From this, it would be possible to calculate other useful parameters, such as the quickest response time to an advertisement, or the average response time for a given advertisement.

The above described embodiments of the present invention enable television viewers, newspaper readers or other consumers to respond to relevant information or advertising via standard SMS technology to a destination using a mobile device, but without the need to enter any content into the mobile device using a keypad. This, in turn, results in a better (easier) user experience and means that more customers will be willing to respond, which, depending on the nature of the communication, could lead to greater volumes of sales. Also rekeying errors are completely avoided. Furthermore, such arrangements are less costly for promoters/advertisers than the existing campaigns using SMS technology which require the use of expensive short codes.

It will be understood that the embodiments described above are given by way of example only and are not intended to limit the invention, the scope of which is defined in the appended claims. It will also be understood that the embodiments described may be used individually or in combination.

## Claims

1. A method of responding to a media entity using a mobile device, the method comprising:
capturing from the media entity, using a sensor of the mobile device, content encoded in a machine-readable form, the content including a reply, a channel identification identifying a channel, and a communications address;
configuring, within the mobile device, a communications message including the reply and channel identification; and
transmitting, from the mobile device, the message to the communications address.

2. A method as claimed in Claim 1, wherein the mobile device comprises a mobile telecommunications device.

3. A method as claimed in Claim 1 or Claim 2, wherein the communications address comprises a telephone number.

4. A method as claimed in any preceding claim, wherein the communications address comprises a telephone number excluding an SMS short code.

5. A method as claimed in any preceding claim, wherein the communications address comprises an e-mail address.

6. A method according to any preceding claim, further comprising extracting from the encoded content the communications address.

7. A method as claimed in any preceding claim, wherein the configuring step comprises constructing an SMS message and the transmitting step comprises transmitting the SMS message.

8. A method as claimed in any preceding claim, wherein the channel comprises one of the group comprising an electronic display in a public place, a media entity board in a public place, a television screen and a printed media entity.

9. A method as claimed in any preceding claim, wherein the content is presented optically and the capturing step comprises capturing the content using an optical sensor of the mobile device.

10. A method as claimed in Claim 9, wherein the content is presented in the form of a two-dimensional barcode.

11. A method as claimed in any preceding claim, wherein the capturing step comprises generating a prompt signal in the vicinity of the media entity to stimulate transmission of the encoded content from a transmitter of the media entity.

12. A method as claimed in any preceding claim, wherein the media entity includes an information element including a radio-frequency signal for transmitting the content and the capturing step comprises capturing the content using a radio-frequency receiver of the mobile device.

13. A method as claimed in Claim 12, wherein the information element comprises a near-field communications signal for transmitting the content, and the capturing step comprises capturing the content using a near-field communications receiver of the mobile device.
